# EUROPEAN PATENT APPLICATION

(11) **EP 2 658 203 A1**
(43) Date of publication of application: **30.10.2013**
(21) Application number: 12165687.0
(22) Date of filing: 26.04.2012
(51) Int. Cl.: H04L 29/06

(54) **Method and computer communication system for the authentication of a client system**

(71) Applicant: OpenLimit SignCubes AG, 6341 Baar (CH)
(72) Inventor: Lunkeit, Armin, 12683 Berlin (DE)
(74) Representative: Gross, Felix

(57) **Abstract**

Method for the authentication of a client system (10) with a service provider system (20), wherein
a) at least one identity token (11) generated by an identity provider system (30) is stored or pre-stored in a database, in particular an encrypted database as Secure Storage System (12),
b) a request (21) for a service is sent to the service provider system (20) by the client system (10),
c) the service provider system (20) initiates an identity authentication process (22, 23) involving the identity provider system (30) to check the validity of the identity token (11),
d) the service provider system (20) provides or denies (24) the requested service in dependence of the validity check of the identity token (11) check by the identity provider system (30). A computer communication system is also described.

## Description

The invention relates to a method with the features according to claim 1 and a computer communication system according to claim 14.

In many applications, such as e-commerce applications it is necessary that e.g. a client of a prospective customer needs to be identified by a service provider system.

It is in the interest of the service provider and the customer, that the identity of the customer is used only by him/her. Especially in the context of mobile clients, e.g. operating on mobile phones, the correct authentication is important.

Client systems are understood to be data processing systems which can be associated with a natural person, e.g. a mobile telephone system, or which are not directly be associated natural person. One example for the latter case is a client system in the form of a physical device which exchanges data with another physical device, without the involvement of a natural person. In both cases the client system comprises the ability to communicate with other systems.

The method according to claim 1 addresses this issue by providing a secure authentication for a client system.

At least one identity token generated by an identity provider system is stored or pre-stored in a database, in particular an encrypted database as Secure Storage System. The generation itself is not necessarily part of the authentication procedure, but the following steps of the method require the existence of the at least one identity token.

Then a request for a service is sent to the service provider system by the client system. Within this context the request is understood to be any command (e.g. GET or POST from a Browser) sent from the client system to the service provider system with the aim to obtain a service offered by the service provider system.

Subsequently the service provider system initiates an identity authentication process involving the identity provider system to check upon the validity of the identity token and the service provider system provides or denies the requested service depending of the outcome of the validity check of the identity token checked by the identity provider system.

In one embodiment the functionality of the Secure Storage System is coupled to a database management system with the following functions, in particular only the following functions:
a) authentication of a user for accessing the database,
b) recalling a list of identity tokens stored in the database,
c) storing of identity tokens in the database,
d) recalling an identity token stored in the database using an unique identifier,
e) deleting the identity token in the database using the unique identifier.

In one embodiment the Secure Storage System with the at least one identity token is stored on a mobile device, in particular a mobile telephone, in particular a mobile telephone, a memory stick and / or an RFID-Device. With this embodiment the identity has become portable without the need for additional proof of identity.

In another embodiment the Secure Storage System with the at least one identity token is stored in a personal computer, a vehicle, in particular a car. In principle the Secure Storage System can be used with all devices having a CPU and a communication interface (Ethernet, GPRS, etc.).

In a further embodiment the Secure Storage System is at least part of an executable file.

Furthermore, in another embodiment the Secure Storage System comprises a key derivative function means.

An especially flexible embodiment comprises an identity token with a plurality of identity features, such as e.g. a name, a ID-number, a credit card number, a fingerprint and / or a biometric record. In principle any identifying feature for a particular business case can be used as identity feature. The identity features (or a combination of the features) of the identity tokens can be associated with security measures, in particular a signature, an encryption and / or different levels of security.

In one embodiment the Secure Storage System comprises an encryption and / or decryption method using an Output-Feedback Mode allowing a partial decryption of the data base.

In a further embodiment the request for a service is sent via an entity enabled by a carrier protocol, in particular a browser, a http enabled browser, an e-Mail and / or an ftp-client.

In another embodiment the client system is associated with a device carried by user.

It is further possible that in one embodiment the service provider system initiates an identity authentication process involving the identity provider system to check the validity of the identity token by sending a request to the identity provider system via the client system and / or directly to the identity provider system. So there are three different routes for the communication between the systems.

The communication between the client system, the service provider system and / or the identity provider system is at least partially performed over the internet, a telephone network and / or a high frequency network. Over those channels and their combinations efficient communication is possible. In particular

The problem is also solved by a computer communication system with the features of claim 14.

The computer communication system has a client system and at least one identity token is generated by an identity provider system stored or pre-stored in a database, in particular an encrypted database as Secure Storage System, with a
a) means for sending a request for a service from the service provider system by the client system, and a
b) means for enabling the service provider system to initiate an identity authentication process involving the identity provider system for checking the validity of the identity token, and a
c) means for receiving the decision of the service provider system to provide or deny the requested service in dependence of the validity check of the identity token check by the identity provider system.

In the figures different embodiments of the invention are described in an exemplary way, in which
- Fig. 1: shows a sequence diagram of a first embodiment of the method;
- Fig. 2: shows a sequence diagram of a second embodiment of the method;
- Fig. 3: shows an embodiment of the method used in controlling the access to a building;
- Fig. 4: shows an embodiment of the method in an online-shopping process;
- Fig. 5: shows the functionality of an output-feedback mode for decryption of parts of the Secure Storage System.

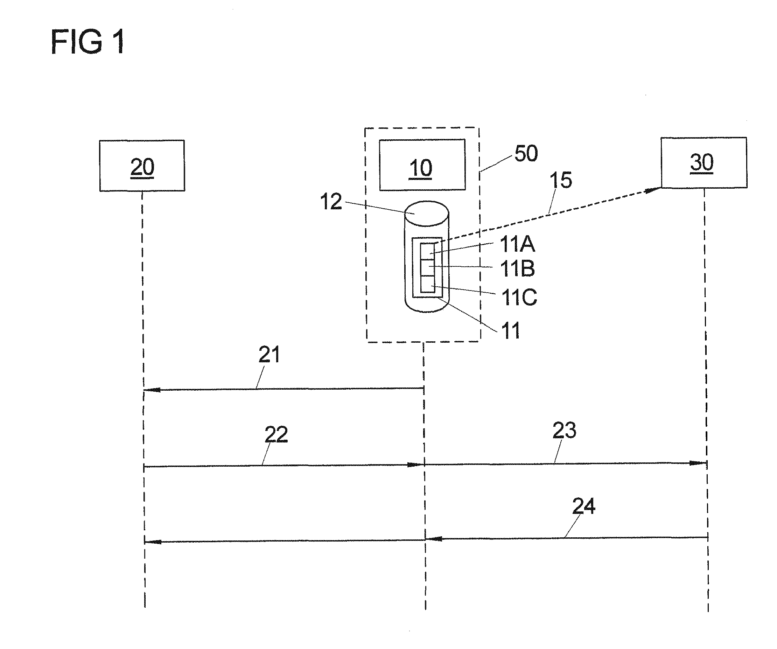

In Fig. 1 the basic data and command exchange between a client system 10, a service provider system 20 and an identity provider system 30 is shown.

The service provider system 20 (generally a stationary computer system) can be considered an identity consumer of the identity data provided by identity provider system 30 (generally also a stationary computer system). It is assumed that there is a trust relationship between the service provider system 20 and the identity provider system 30, so that the service provider system 20 can rely on the authenticity of the electronic identity of the respective client systems 10. In general a request for an authentication of an identity by an identity consumer comprises an attribute which allows the identity provider system 30 to check if the request is valid.

The client system 10 can be running on a data processing system such as e.g. a desktop computer, an embedded system, a tablet computer or a mobile phone. The client system could e.g. be embedded in a car where it would communicate with entities within the car or outside the car.

In the following the embodiments will be described mostly in connection with a client system 10 on a mobile system 50 but the invention is not limited to this particular embodiment.

The client system 10 can comprise e.g. a software component which can handle security protocols, as will be described below. Alternatively the client system 10 can be at least in part built into a hardware system such as a computer chip.

The client system 10 is coupled with a Secure Storage System 12 running on the client system 10. In the Secure Storage System 12, at least on identity token 11 with a plurality of identity features 11A, 11B, 11C is stored.

A database functions as the Secure Storage System 12. In this embodiment the Secure Storage System 12 is an executable file, which performs a certain task according to the encoded instructions. The Secure Storage System 12 is a (structured) file with containing the database

A database in this context means a collection of data in a logical coherent way which is managed through a database management system. When the executable file is invoked by an authenticated user the database management system allows access to the database without mounting a file system. The database of the Secure Storage System 12 can only be accessed through an interface provided by the database management system, in one embodiment SQL commands are accepted to query the database.

The database allows in particular the storage of an element (here e.g. an identity token 11), resulting in the allocation of a unique identifier for that element which allows the can be used to recall that element.

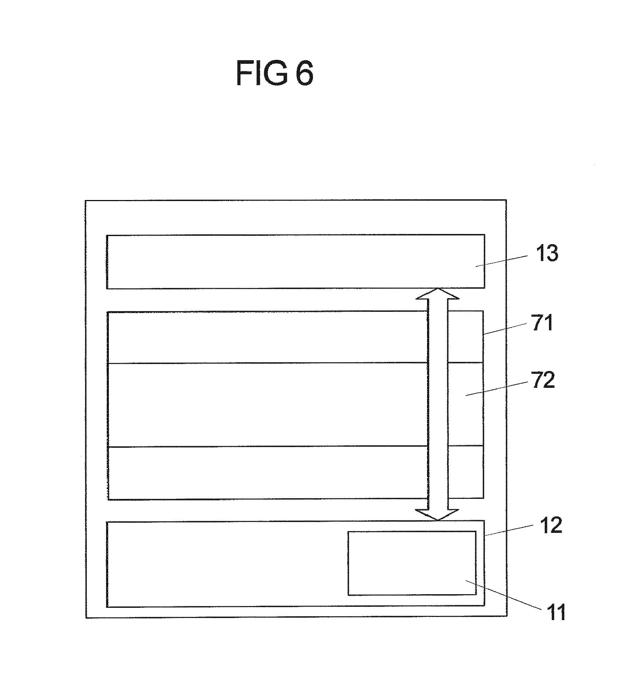

A database management system 72 (see Fig. 6) for handling a Secure Storage System 12 can have the following functions:
- Authentication of a user for accessing the database. An authentication of a user requires the input of a PIN code by the user which has been requested at the initialization of the method. This PIN code is used in a Key Derivation Function (KDF) to compute e.g. an AES key which is used in an encryption / decryption (see below) of the Secure Storage System 12.
- Recalling a list of identity token 11 stored in the database. The list can comprise the name of the identity token 11, an internal database ID code of the identity token 11 and / or a type of the identity token 11. The listing could be achieved by the following SQL command: SELECT ID, Type, Name FROM database
- Storing of identity tokens 11 in the database. When an identity token 11 is stored, a command similar to the SQL Command INSERT INTO database (Type, Name, Content) VALUES ("my datatype", "Name XY", "FOO"). The database internal ID is generated automatically by the Secure Storage System 12.
- Recalling an identity token 11 stored in the database using a unique identifier. This functionality works in an analogue way to the storing of an identity token 11.
- Deleting the identity token 11 in the database using the unique identifier. This functionality works in an analogue way to the storing of an identity token 11.

For security reasons can be useful that the function set for the database management system for the Secure Storage System 12 is limited to these functions.

The database in its physical form is an encrypted file, i.e. the content of the database is only retrievable if the correct key is supplied during the authentication. The file in the described embodiment can be encrypted with an AES Algorithm in OFB (Output-Feedback) mode with a key length of 128 bit. In alternative embodiments other encryption algorithms and other key lengths (in particular longer key lengths) can be used.

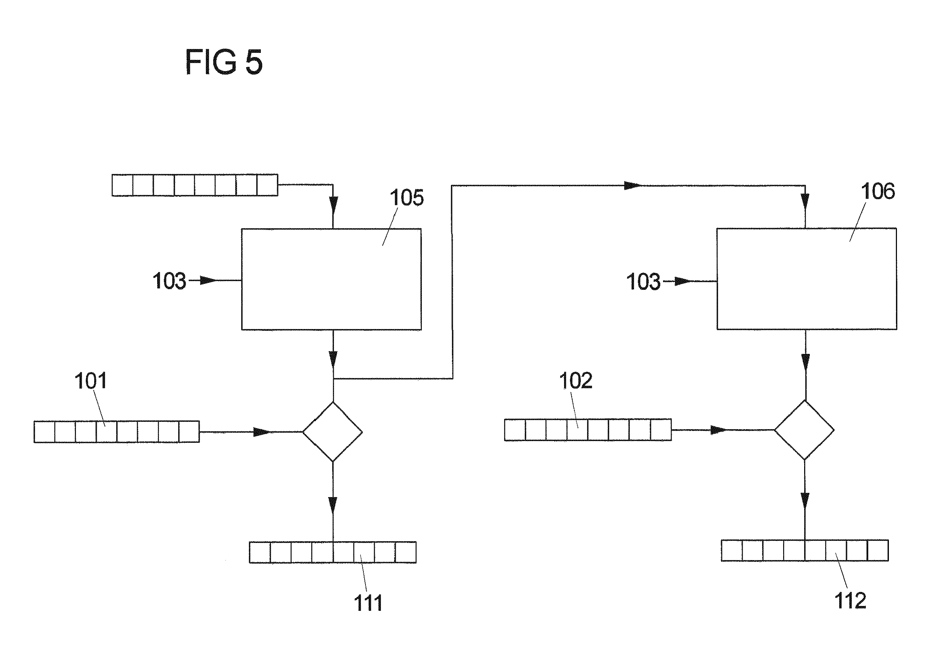

The OFB mode is a so called block-mode allowing a section-wise decryption of the database. The advantage is that not the complete database needs to be decrypted when a user wants to access the database content. An application of the OFB mode is described in connection with Fig. 5.

An identity token 11 is an electronic representation of the identity of a person or a device, in this case the user of the client system 10. The identity token 11 comprises data related to the electronic identity of a person, e.g. a name, a telephone number or other information. The identity token 11 can be protected with an electronic signature and / or it can be encrypted. Further details about different embodiments of the identity token 11 will be given below. The recipient of the identity token 11 (e.g. the service provider system 20) will examine the validity of the identity token 11.

The client system 10 requires access to the service provider system 20 to obtain some sort of protected resource, e.g. to make a purchase or to gain access to a protected resource. In one embodiment the service provider system 20 can be part of a web shop.

The client system 10 needs authentication by using the identity token 11.

The authentication is achieved by using the identity provider system 30. This is to be considered a trustworthy system which can give other systems reliable identity information. The electronically delivered identity information in the form of the identity token can form the basis for a decision of a service provider system 20 to provide the service to a client system 10 or to withhold the service from a client system 10.

With reference to the sequence diagram shown in Fig. 1 one prerequisite for an embodiment of an authentication method is the generation 15 of an identity token 11 by the identity provider 30 at one point in time.

In Fig. 1 it is indicated that the identity token 11 can comprise a plurality of identity features 11A, 11B, 11C, such as a name or a telephone number. For a person or a device it is possible to have different identities in the sense that each identity has a different set of identity features 11A, 11B, 11C so that e.g. not the full set of identity information has to be used in each and every transaction.

The identity token 11 is stored in Secure Storage System 12, i.e. a (structured) file containing the database. This means that the identity token 11 cannot be seen as an individual file. The Secure Storage System 12 has to be executed, to gain access to the identity token 11.

The Secure Storage System 12 is coupled to the client system 10, i.e. it can be stored on the same hardware device such as a mobile device. In other embodiments, the Secure Storage System 12 and the client system 10 are stored on different devices.

The embodiment of the method as such requires an identity token 11, but this does not mean that for each authentication request, a new identity token 11 has to be generated. The following steps of the authentication method require that an identity token 11 is present in the Secure Storage System 12.

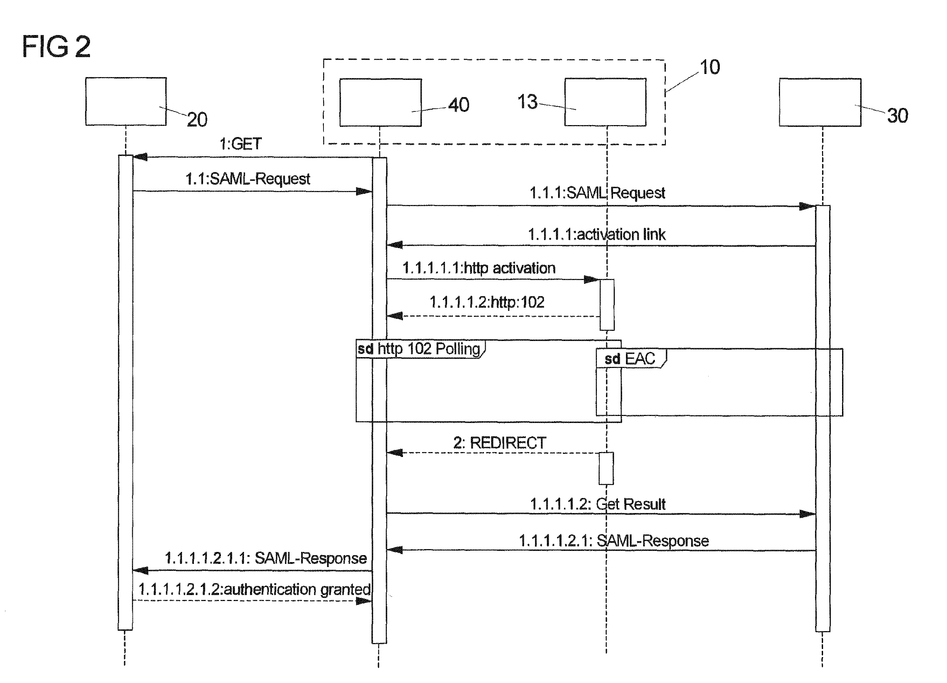

First the client system 10 requests 21 a service from the service provider system 20. This could e.g. be a request to order a book from an online seller. This can be made from a browser 40 (see Fig. 2) running on the client system 10.

The service provider system 20 processes the request 21 and starts an authentication process 22 by sending a message to the client system 10 with the Secure Storage System 12 containing the identity token 11. The authentication process 22 uses the identity token 11 to query 23 the appropriate identity provider system 30.

The identity provider system 30 decides if the identity token 11 is valid or not and returns the information of the validity back to the service provider 20. Depending on the result of the validity check the service is provided or refused.

With this method an electronic identity of the client system 10 of a user is provided. The representation of the user's identity is stored in the client system 10 so that a decentralized storage of an identity is achieved. This has the advantage, that a centralized storage of identity data is not required increasing the security of the complete system. The identity provider system 30 does not store any individualized data or identity tokens 11. It can only state that an identity token 11 has been (or has been not) issued by the identity provider system 30.

In Fig. 2 a second embodiment with features in addition to the ones shown in Fig. 1 is described. In particular a browser system 40 is shown as an extra instance. An electronic identity client (eID-Client) 13 and the browser system 40 are part of the client system 10.

In a step indicated by 1 a GET request is sent to the service provider system 20 invoking a protected page. The service provider system 20 replies with a SAML (Security Assertion Markup Language) request 1.1 to the browser system 40 which is then forwarded as SAML request 1.1.1 to the identity provider system 40.

SAML has the advantage that it is subject to a well defined standard by OASIS (Organization for the Advancement of Structured Information Standards), but flexible enough to allow for special use scenarios.

The identity provider system 30 processes the SAML-request and replies (1.1.1.1) with a page comprising an activation link to the browser system 40 which sends a request 1.1.1.1.1 for starting the identity client 13 on the client system 10. The identity client 13 on the client system 10 replies with the HTTP response code 102 to the browser system 40.

Next the communication between the identity client 13 on the client system 10 and the identity provider system 30 is performed using the EAC protocol. This comprises a request to the identity provider system 30 if the identity related to the request is recognized by the identity provider system 30. If that is the case, the communication is continued between the browser system 40 and the identity provider system 30. Parallel, a Polling steps are performed between the browser system 40 and the identity client 13 to check the status of the processing.

In the shown embodiment, the communication between the identity client 13 within the client system 10 uses the EAC (Extended Access Control) protocol. After the completion of the EAC authenticated communication the identity client 13 of the client system 10 sends out a status reply (2: REDIRECT) to the browser system 40 resulting in a redirection to the identity provider system 30 (1.1.1.1.2: Get result).

The EAC authentication is described in the document "BSI TR-03110 Advanced Security Mechanisms for Machine Readable Travel Documents" issued by the Bundesamt für Sicherheit in der Informationstechnik.

The service provider system 30 replies with a SAML response (1.1.1.1.2.1) which in turn is forwarded to the service provider system 20 (1.1.1.1.2.1.1).

Depending on the validity of the identity token 11 the service provider system 20 automatically decides to allow access to the protected resource or refuse the access (1.1.1.1.2.1.2).

In the following some details regarding embodiments of the identity tokens 11 are given.

In one embodiment the identity token 13 comprises XML-structured code.

The following data can e.g. be stored in the identity token 13: a version number, a security level, a name of the issuer of the identity token 11, a data field, an electronic signature of the identity token 11 by the owner of the identity token 11 and / or an electronic signature of the identity token 11 by the issuer (i.e. the identity provider system 30).

For example in one embodiment, three different levels of security can be used:
a) No information is provided about the real identity of the person.
b) During the creation of the identity token 11 some sort of identification document, e.g. a new electronic ID-card has been used.
c) During the creation of the identity token 11 a chip card with a qualified signature has been used.

The version number can be used to ensure interoperability in case of updates.

The name of the issuer of the identity token 11 is represented by an UUID (Universally Unique Identifier), i.e. a unique identity token 11 specific code. This works as a global locking mechanism. Since the UUID is reasonably anonymous, it would be very difficult to backtrack from an UUID to the owner of the client system 10.

The user data is stored in the data field. This can be done in a tag/value structure.

The signature of the identity token 11 owner ensures that the respective data is correct and genuine.

The signature of the identity provider system 30 guarantees to the service provider system 20 that it is a genuine identity token 11. The service provider system 20 has to verify the complete electronic signature, i.e. a mere verification of the cryptographic correctness might not be sufficient.

Embodiments of the described method and systems can be used in a wide variety of scenarios.

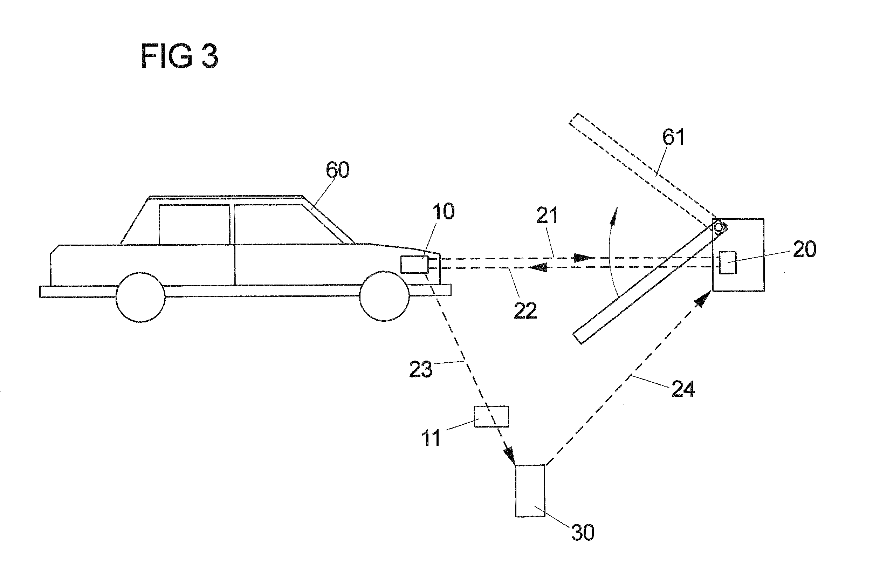

One important group of application is the identification of devices, comprising a client system 10. Those devices can be mobile, portable devices, such as mobile phones. But also other devices, such as personal computers, cars, memory sticks and the like can comprise a client system 10. Those devices can be used by a user to aid in an interaction with a service provider, but they can also be used autonomously, e.g. a car can identify itself by passing by a scanner which is connected to a service provider 20. Or a person can carry a device with a client system 10, which in turn uses a service provider 20 to control the access to a building or a site. This application is shown as an example in Fig. 3.

Fig. 3 shows a car 60 which comprises a client 10 which is coupled with a wireless receiver / transmitter for transferring data. The service the driver of the car 60 requests is access to a building symbolized by a barrier 61 which can be opened or closed depending on the identity of the car 60.

At the beginning the client system 10 of the car 60 transmits a request 21 for a service to a service provider system 20 which is coupled to the barrier 61.

The authentication process is then initiated by a request to the identity provider system 30, the request being sent via the client system 10. The request 22 is first sent to the client system 10, and then the request 23 is sent to the identity provider system 30 which is located elsewhere.

The identity provider system 30 checks the incoming data and authenticates the identity token 11 received. The identity token comprises at least one identity feature which in this case might comprises information regarding the license plate of the car 60.

The identity provider system 30 determines if the identity token 11 was indeed created by the system (or not). Only in the case, that the identity token 11 was generated by the identity provider system 30, reply 24 is transmitted to the service provider 20 with an indication that the service can indeed be provided. In the current example the barrier is lifted so that the car 60 can enter the restricted area, i.e. the service is provided.

Another application could be an embedded client device 10 in a clamp for a car which has exceeded its allotted parking time. Given the proper identification, which might involve license plate information, the clamp might be removed, only after a service provider 20 has paid the prescribed fee for releasing the clamp. In these or other applications it is possible that the embodiments of the authentication method are used in the closing of a binding legal agreement between two parties.

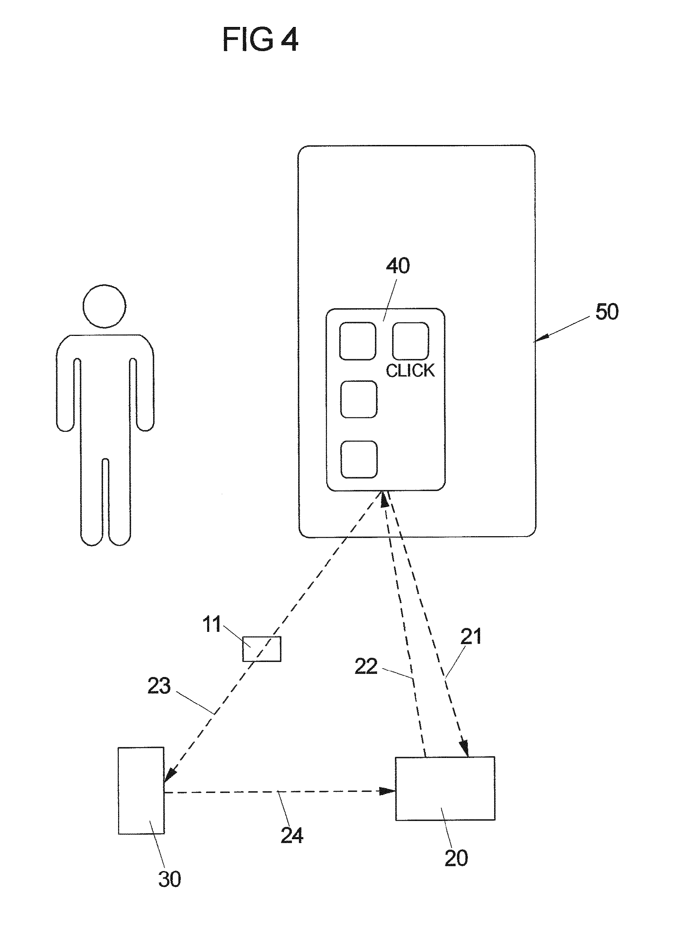

In Fig. 4 an authentication process is demonstrated in an online shopping scenario.

Here a person uses a mobile phone 50 which comprises a client system 10. The client system 10 can be embedded into the mobile phone 50 and / or linked with the mobile phone 50. In any case the person has alone control over the client system 10 which can transmit data wirelessly.

The person requests 21 a service from the service provider system 20, in this case the selling of a book to that person.

The service provider system 20 requests 22, 23 identity information from the identity provider system 30. There the identity token 11 is evaluated. The result is transmitted 24 from the identity provider 30 to the service provider 20. The latter can then initiate the sale based on the evaluation result.

Further applications can be found in the context of social networks. Here it is important that at least the provider of the social network has a clear idea about the identities of the users.

Furthermore, an embodiment of the method can be used in the context of managing on-line subscriptions, as e.g. mobile telephone contracts. Here all data is generally only available via the Internet. The secure authentication allows more security for the users and the providers of such services.

In Fig. 5 the process of the Output-feedback (OFB) mode in decrypting the Secure Storage System 12 is described in more detail.

Here the Secure Storage System 12, i.e. the database file is encrypted with a key length of 128 bit. In each and encryption or decryption step a section of 16 bytes can be encrypted or decrypted. Subsequently, a new key processing takes place according to the AES standard and the next block of 16 bytes is encrypted or decrypted. This is a block-cipher since the data is processed in blocks.

Fig. 5 schematically shows the functionality of this algorithm in encrypting two blocks of plain text 201, 202.

On a first plain text block 101 (16 Bytes long) a first encryption step 105 is applied using the encryption key 103. The result is a first ciphertext block 111.
But the same encryption key 103 can be used in another encryption step, i.e. the second encryption step 106 to encrypt a second plain text 102 to obtain a second ciphertext block 112. This second encryption 106 step does not have to ob be sequential to the first encryption step 105, both are independent as shown in Fig. 5.

In addition it is possible that an encryption step 105 can read in an initialization vector increasing the entropy of the encrypted data.

The block-wise decryption of the ciphertext block 111, 112 operates in the reverse direction as shown in Fig. 5.

In Fig. 6 the connection of the Secure Storage System12 12 with the electronic identity client 13 (within client system 10) is shown in more detail.

The database provides the structure for the Secure Storage System 12 in which the identity tokens 11 are stored. The electronic identity client 13 handles the Input and Output of the Secure Storage System 12, in particular the communication with the identity provider system 30. It realizes the EAC protocol and involves a number of layers in this embodiment to communicate with the Secure Storage system 12.

Central to the communication is a Databank Management System 72 which allows the access to the Secure Storage System 12 using a set of functions e.g. described above.

The Database Management System 72 is coupled with an API (Application Programming Interface) 71. Furthermore it is coupled with an encryption layer 73 (e.g. AES OFB 128 as described above). The layered structure shows which layers have to be used to get access to the content of the Secure Storage System 12.

In particular it is only possible to gain access to the Secure Storage System 12 via the API 71.

The identity client system 13 can only get access to the identity token 13, by extracting it from the Secure Storage System 12. This extraction is transparent for the logical layer of the identity client system 13 because the internal interface 71 (i.e. the interface to the Secure Storage System) shields the function completely.

### Reference numbers

- 10: Client system
- 11: Identity Token
- 11A, B, C: Identity features
- 12: Database as Secure Storage System of client system
- 13: electronic identity client (within client system)

- 15: Generation of an identity token

- 20: Service provider system
- 21: Request for service to service provider system
- 22: Authentication process, request to identity provider system;
- 23: Authentication process, query to identity provider system;
- 24: Authentication process, reply from identity provider system

- 30: Identity provider system

- 40: Browser system

- 50: Portable unit
- 60: Car
- 61: Barrier

- 71: Application Programming Interface Layer
- 72: Database Management System
- 73: Encryption layer
- 101: First plain text
- 102: Second plain text
- 103: Encryption key
- 105: First encryption step
- 106: Second encryption step
- 111: First cipherblock
- 112: Second cipherblock

## Claims

1. Method for the authentication of a client system (10) with a service provider system (20), wherein
a) at least one identity token (11) generated by an identity provider system (30) is stored or pre-stored in a database, in particular an encrypted database as Secure Storage System (12),
b) a request (21) for a service is sent to the service provider system (20) by the client system (10),
c) the service provider system (20) initiates an identity authentication process (22, 23) involving the identity provider system (30) to check the validity of the identity token (11),
d) the service provider system (20) provides or denies (24) the requested service in dependence of the validity check of the identity token (11) check by the identity provider system (30).

2. Method according to claim 1, wherein functionality of the Secure Storage System (12) is coupled to a database management system (71) with the following functions, in particular only the following functions:
a) authentication of a user for accessing the database,
b) recalling a list of identity tokens (11) stored in the database,
c) storing of identity tokens (11) in the database,
d) recalling an identity token (11) stored in the database using an unique identifier,
e) deleting the identity token (11) in the database using the unique identifier.

3. Method according to claim 1 or 2, wherein the Secure Storage System (12) with the at least one identity token (11) is stored on a portable device (50), in particular a mobile telephone, a memory stick and / or an RFID-Device.

4. Method according to at least one of the preceding claims, wherein the Secure Storage System (12) with the at least one identity token (11) is stored in a personal computer, a vehicle, in particular a car.

5. Method according to at least one of the preceding claims, wherein the Secure Storage System (12) is at least part of an executable file.

6. Method according to at least one of the preceding claims, wherein the Secure Storage System (12) comprises a key derivative function means.

7. Method according to at least one of the preceding claims, wherein the at least one identity token (11) comprises a plurality of identity features (11A, 11B, 11C), in particular a name, a ID-number, a credit card number, a fingerprint and / or a biometric record.

8. Method according to claim 7, wherein the identity features (11A, 11B, 11C) of the at least one identity tokens (11) are associated with security measures, in particular a signature, an encryption and / or different levels of security.

9. Method according to at least one of the preceding claims, wherein the Secure Storage System (12) comprises an encryption and / or decryption method using an Output-Feedback Mode allowing a partial decryption of the data base.

10. Method according to at least one of the preceding claims, wherein the request (21) for a service is sent via an entity enabled by a carrier protocol, in particular a browser (40), an http-enabled browser (40), an e-Mail and /or an ftp-client.

11. Method according to at least one of the preceding claims, wherein the client system (10) is associated with a device carried by user.

12. Method according to at least one of the preceding claims, wherein the service provider system (20) initiates an identity authentication process (22, 23) involving the identity provider system (30) to check the validity of the identity token (11) by sending a request to the identity provider system (30) via the client system (10) and / or directly to the identity provider system (30).

13. Method according to at least one of the preceding claims, wherein the communication between the client system (10), the service provider system (20) and / or the identity provider system (30) is at least partially performed over the internet, a telephone network and / or a high frequency network.

14. Computer communication system with a client system (10) and at least one identity token (11) generated by an identity provider system (30) stored or pre-stored in a database, in particular an encrypted database as Secure Storage System (12), with a
a) means for sending a request (21) for a service from the service provider system (20) by the client system (10), and a
b) means for enabling the service provider system (20) to initiate an identity authentication process (22, 23) involving the identity provider system (30) for checking the validity of the identity token (11), and a
c) means for receiving the decision of the service provider system (20) to provide or deny (24) the requested service in dependence of the validity check of the identity token (11) check by the identity provider system (30).
